# EUROPEAN PATENT APPLICATION

(11) **EP 2 660 133 A1**
(43) Date of publication of application: **06.11.2013**
(21) Application number: 11852900.7
(22) Date of filing: 22.12.2011
(51) Int. Cl.: B62J 1/12, B62K 19/16, B62K 19/30

(54) **AUTOMATIC TWO-WHEELED VEHICLE SEAT FRAME**

(30) Priority: 27.12.2010 JP 2010289697
(71) Applicant: Toray Industries, Inc., Tokyo 103-8666 (JP); Yamaha Hatsudoki Kabushiki Kaisha, Iwata-shi, Shizuoka 438-8501 (JP)
(72) Inventor: WAKABAYASHI Hiroki, Nagoya-shi Aichi 455-8502 (JP); HARA Shinji, Iwata-shi Shizuoka 438-8501 (JP); HARA Shinya, Iwata-shi Shizuoka 438-8501 (JP)
(74) Representative: Hoefer & Partner
(86) International application number: PCT/JP2011/079769
(87) International publication number: WO 2012/090848

(57) **Abstract**

A motorcycle seat frame, wherein a bottom surface part extending in a vehicle longitudinal direction and side surface parts standing upward at least at positions on both sides in a vehicle width direction of the bottom surface part are made of a fiber reinforced resin, thereby making an efficient improvement in the bending stiffness in a vehicle vertical direction possible using the anisotropy of the fiber reinforced resin, and also making marked weight reduction as a whole possible. Provided is a motorcycle seat frame which achieves an efficient increase in bending stiffness in a desired direction in terms of material without improvement in mechanical structure, and enables marked weight reduction while required bending stiffness is ensured.

## Description

### Technical Field of the Invention

The present invention relates to a motorcycle seat frame and specifically relates to a motorcycle seat frame made of a material different from conventional ones.

### Background Art of the Invention

There have been various suggested improvements in structures of motorcycle sheet frames made of a magnesium alloy or an aluminum alloy as disclosed in Patent document 1. However, a sufficient weight reduction would be difficult even through employing the magnesium alloy or aluminum alloy because of their specific gravities greater than that of resins though the specific gravities of those alloys are smaller than that of iron. Further, those alloys are often made by casting and generally hard to be thinned. Furthermore, in order to prevent the shrinkage and the shrinkage crack, the shape and thickness change are often restricted or many small protrusions are often required to be provided in casting.

A motorcycle seat frame is usually configured to be fixed by coupling on a main frame at the front end and extend backward in the vehicle longitudinal direction. And the seat frame is required to mainly have a high longitudinal bending stiffness in the vehicle vertical direction. The frame is usually designed to be comparatively thick to achieve such a required stiffness. However, an isotropic material, such as the magnesium alloy and aluminum alloy, which has been formed thick might have an excessive lateral stiffness in an unexpected direction such as a vehicle width direction. Thus, since the lateral stiffness might be excessive, such a comparatively thick frame for ensuring the longitudinal bending stiffness has been a disincentive to reduce weight of a whole seat frame.

Although a bending stiffness in a predetermined direction can be improved by making an anisotropic structure from an isotropic material, much complicated shape often must be formed. Such a complicated shape makes it much difficult that the seat frame is greatly reduced in weight as a whole. Also, such a complicated shape might reduce the productivity.

### Prior art documents

### Patent documents

Patent document 1: JP2006-232166-A

### Summary of the Invention

### Problems to be solved by the Invention

Accordingly, an object of the present invention is to provide a motorcycle seat frame, which achieves an efficient increase of the bending stiffness in a desired direction in terms of material without improvements in mechanical structure, and enables marked weight reduction while required bending stiffness is ensured.

### Means for solving the Problems

To achieve the above-described object, a motorcycle seat frame according to the present invention is a motorcycle seat frame characterized in that a bottom surface part extending along a vehicle longitudinal direction and a side surface part standing upward at least at positions on both sides in a vehicle width direction of the bottom surface part are made of a fiber reinforced resin.

In such a motorcycle seat frame according to the present invention, a substantively whole basic component of a conventional seat frame comprising the bottom surface part extending along the vehicle longitudinal direction and the side surface part standing upward at positions on both sides in the vehicle width direction of the bottom surface part is made into an integrated structure made of the fiber reinforced resin. Because the specific gravity of the fiber reinforced resin is much smaller than those of magnesium alloy and aluminum alloy as conventional material for the frame, a sufficient weight reduction of the seat frame can be achieved as a whole. Further, because it is easy to give an anisotropy in a target direction, a bending stiffness only in a desirable direction can be enhanced efficiently. Furthermore, because the stiffness and strength in a predetermined portion or predetermined direction can be enhanced by designing without increasing thickness as a whole, both the weight reduction and required bending stiffness can be achieved efficiently. Furthermore, because there are substantively no restrictions on molding which used to exist in conventional casting methods, the seat frame can be produced easily in an excellent productivity, so as to easily meet a mass production.

Thus, because the motorcycle seat frame according to the present invention makes it possible to efficiently enhance the bending stiffness only in a desirable direction, a structure as a characteristic unique to motorcycle seat frames of which bending stiffness in a vehicle vertical direction is set greater than that in the vehicle width direction can be achieved easily and surely.

In order to achieve such a characteristic of the bending stiffness more efficiently, it is preferable that the fiber reinforced resin comprises a unidirectional reinforcing-fiber base material in which reinforcing fibers are oriented in the vehicle longitudinal direction. The unidirectional reinforcing-fiber base material, such as shaped like a tape, can easily be provided and extended in a predetermined portion, and therefore mechanical characteristics such as a stiffness in a predetermined portion or direction can be improved efficiently. For example, in order to efficiently improve the stiffness in a predetermined direction, which is specifically the vehicle vertical direction, it is preferable that at least two different portions in the vertical direction are made of the unidirectional reinforcing-fiber base material and that the unidirectional reinforcing fiber base material is extended along the vehicle longitudinal direction in the portions. The unidirectional reinforcing-fiber base material is provided in the different portions, which are distant from each other, in the vertical direction, so that the section stiffness of the frame is improved efficiently without requiring a great section area, and therefore the weight reduction is achieved as the bending stiffness in the vehicle vertical direction is improved efficiently.

Particularly, it is preferable that the fiber reinforced resin contains at least 30%, and further preferably at least 50%, of the unidirectional reinforcing-fiber base material. If the unidirectional reinforcing-fiber base material is contained by such a proportion, the stiffness can be substantially improved by the anisotropy (unidirectional characteristics) of the fiber reinforced resin.

As to a concrete structure of the motorcycle seat frame according to the present invention, it is possible that the side surface part consists of a first side surface part standing upward from the bottom surface part (from the bottom surface part at positions on both sides in the vehicle width direction), a second side surface part positioned across a space outside the vehicle from the first side surface part, and a coupling part which couples the first side surface part and the second side surface part. It is preferable that the unidirectional reinforcing-fiber base material in which reinforcing fibers are oriented in the vehicle longitudinal direction is provided at least in the coupling part, and more preferably is also provided in either the position of the bottom surface part from which the first side surface part stands upward or a position close thereto. If a great load is applied along the vertical direction to the open-top seat frame of which side surface part stands upward from the bottom surface part at positions on both sides in the vehicle width direction, the top side of the both side surface parts might open and close slightly along the vehicle width direction so as to cause a lack of longitudinal bending stiffness. On the other hand, the present invention makes it possible that the bending stiffness is enhanced efficiently in the vehicle vertical direction, by giving a high stiffness to the lightweight cross-section structure and arranging the unidirectional reinforcing-fiber base material appropriately as described above.

In the present invention, the reinforcing fiber in the fiber reinforced resin may be a carbon fiber, glass fiber, aramid fiber, or hybrid composition thereof. From a viewpoint of excellent bending stiffness achievement, it is preferable to contain a carbon fiber which has high rigidity and strength and can be easily molded and easily designed. A matrix resin of the fiber reinforced resin may be any of thermosetting resins and thermoplastic resins. A typically available thermosetting resin is an epoxy resin. In a case where the thermosetting resin is used, a molding method, such as RTM (Resin Transfer Molding) and press molding with a prepreg, is applicable. In a case where the thermoplastic resin is used, an injection molding is applicable in addition to the above-described molding method. Available thermoplastic resins are polyamide (nylon 6, nylon 66, etc.), polyolefin (polyethylene, polypropylene, etc.), polyester (polyethylene terephthalate, polybutylene terephthalate, etc.), polycarbonate, polyamide-imide, polyphenylene sulfide, polyphenylene oxide, polysulfone, polyether sulfone, polyetheretherketone, polyetherimide, polystyrene, ABS, liquid crystalline polyester, and copolymer of acrylonitrile and styrene. Mixtures of them can also be used. Further, a copolymerized material such as a copolymerized nylon made from nylon 6 and nylon 66 can be used. Furthermore, depending on required characteristics of a target molding, added can be fire retardant, weatherproof conditioner, other antioxidants, heat stabilizer, ultraviolet absorber, plasticizer, lubricant, coloring agent, compatibilizer, or conductive filler, etc.

### Effect according to the Invention

The motorcycle seat frame according to the present invention makes it possible to provide a seat frame of which weight has been greatly reduced with respect to a conventional seat frame made of a magnesium alloy or aluminum alloy because a substantively whole seat frame, at least its basic component part, is made into an integrated structure made of the fiber reinforced resin. Further, the bending stiffness in a predetermined direction can be improved by utilizing the anisotropy of the fiber reinforced resin without increasing thickness as a whole, and therefore both the weight reduction and required bending stiffness can be achieved efficiently. Furthermore, because there is almost no restriction on molding which used to exist in conventional casting methods, a seat frame having a desirable shape and characteristics can be produced easily in an excellent productivity.

### Brief explanation of the drawings

[Fig. 1] Fig. 1 is a perspective view of a motorcycle seat frame according to an embodiment of the present invention.
[Fig. 2] Fig. 2 is a plan view of the seat frame in Fig. 1.
[Fig. 3] Fig. 3 is a cross-section view of the seat frame along line III-III in Fig. 2.

### Embodiments for carrying out the Invention

Hereinafter, desirable embodiments of the present invention will be explained as referring to figures.

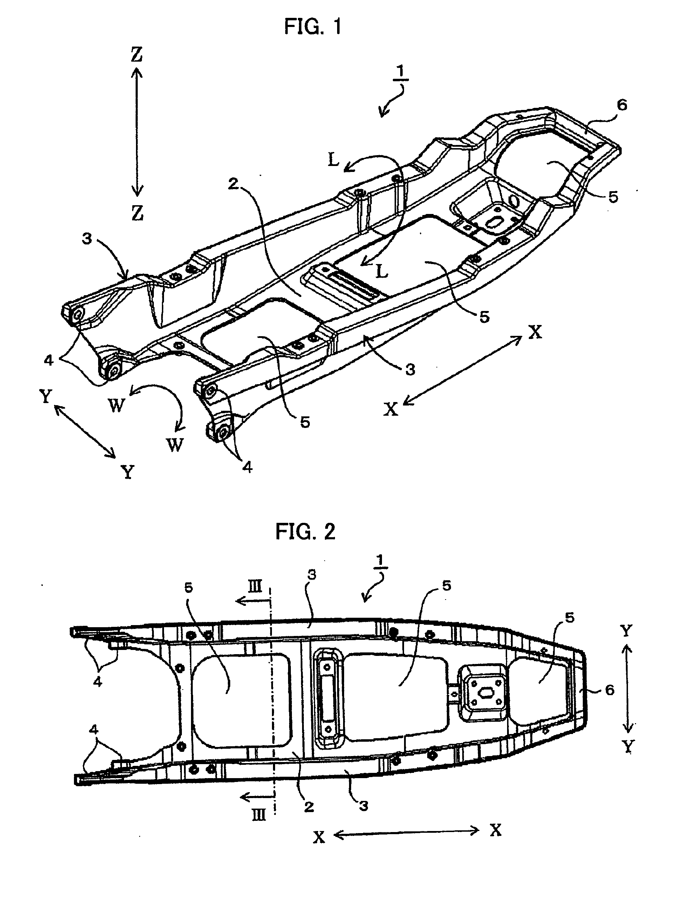

Fig. 1 and Fig. 2 show motorcycle seat frame 1 according to an embodiment of the present invention. Seat frame 1 has bottom surface part 2 extending in vehicle longitudinal direction X-X and side surface parts 3 standing up from bottom surface part 2 at both ends in vehicle width direction Y-Y. Bottom surface part 2 and both side surface parts 3 are made of a fiber reinforced resin. The fiber reinforced is preferably a carbon fiber reinforced resin from viewpoints of a flexible designing, easy forming and an excellent bending stiffness to be achieved. The front end of seat frame 1 is provided with fixation coupling parts 4 for connecting a main frame (not shown). Bottom surface part 2 extends between both side surface parts 3 and is provided with large holes 5 in regions where the strength and stiffness are not so required, in order to reduce in weight. Rear ends of both side surface parts 3 are coupled through connection wall 6 to achieve a structure having a sufficient strength of seat frame 1 as a whole.

Motorcycle seat frame 1 is configured to have a bending stiffness in vehicle vertical direction Z-Z, which means a stiffness against bending along L-L curve in Fig. 1 and is greater than a bending stiffness in vehicle width direction Y-Y which means a stiffness against bending along W-W curve in Fig. 1. Thus, bending stiffness characteristics specifically required in a motorcycle seat frame are achieved. Such a magnitude relation of the bending stiffness should be satisfied at least in a region where bottom surface part 2 and both side surface parts 3 exist, except for a local region where connection wall 6 exists.

While the weight reduction of seat frame 1 is achieved as a whole by employing the fiber reinforced resin, the above-described bending stiffness can be achieved desirably as described below by a method such as utilizing of the anisotropy of the fiber reinforced resin, structure of side surface part 3, and partial provision of the anisotropic fiber reinforced resin in appropriate positions, or combinations thereof.

If the anisotropy of the fiber reinforced resin is only utilized, the desirable bending stiffness can be achieved by devising an orientation of reinforcing fibers in bottom surface part 2 and side surface part 3 made of the fiber reinforced resin. For example, the desirable bending stiffness can be achieved, if the fiber reinforced resin includes reinforcing fibers as reinforcing-fiber base materials extending along vehicle longitudinal direction X-X, more than reinforcing fibers extending along vehicle width direction Y-Y.

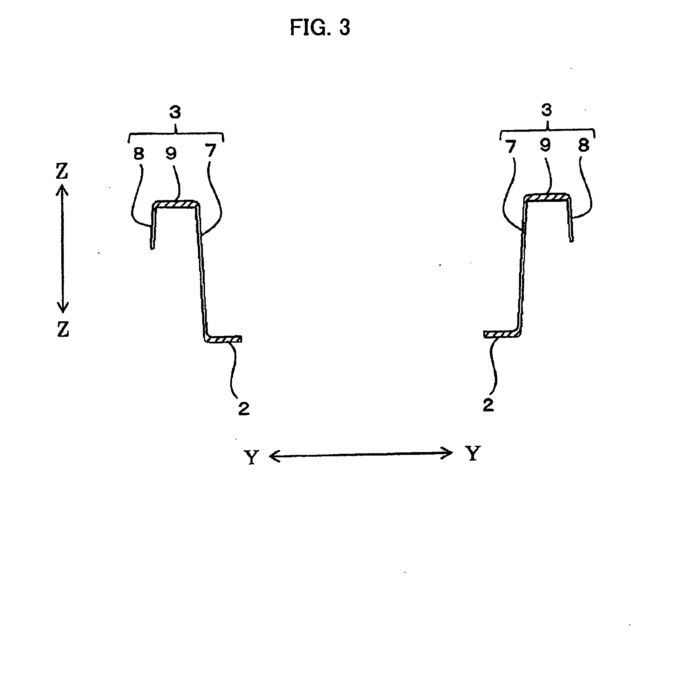

If the structure of side surface part 3 is devised or the anisotropic fiber reinforced resin is partially provided in appropriate positions, the following configuration can be employed. In this embodiment, seat frame 1 has a cross section as shown in Fig. 3, where side surface part 3 consists of first side surface part 7 standing upward from bottom surface part 2 at positions on both sides in vehicle width direction Y-Y, second side surface part 8 positioned across a space outside the vehicle from first side surface part 7, and coupling part 9 which couples first side surface part 7 and second side surface part 8 at their top end. With such a structure, the bending stiffness of side surface part 3 is improved in vehicle vertical direction Z-Z at first and then the bending stiffness of seat frame 1 is improved as a whole in vehicle vertical direction Z-Z.

In order to efficiently improve the bending stiffness in vehicle vertical direction Z-Z as a predetermined direction, it is preferable that a unidirectional reinforcing-fiber base material in which reinforcing fibers are oriented in vehicle longitudinal direction X-X is provided at least in coupling part 9, and more preferably, is provided at least in coupling part 9 and bottom surface part 2 from which first side surface part 7 stands upward or its neighborhood (hatched portion in Fig. 3). Thus, the unidirectional reinforcing-fiber base material in which reinforcing fibers are oriented in vehicle longitudinal direction X-X is provided at least in two hatched portions shown in Fig. 3 which are distant from each other in the vertical direction, so that the section stiffness is greatly improved efficiently and the bending stiffness of seat frame 1 is surely greatly improved efficiently in vehicle vertical direction Z-Z. Such a configuration to provide the unidirectional reinforcing fiber base material can be achieved by adhesion or burying. Because such a configuration can be achieved if only a comparatively thin tape of the unidirectional reinforcing-fiber base material is added, the weight reduction can surely be achieved as a whole and the bending stiffness can be efficiently improved in vehicle vertical direction Z-Z. Besides, if such a comparatively thin unidirectional reinforcing-fiber base material is added, the rest of the reinforcing-fiber base material may be a reinforcing-fiber base material made of a woven fabric to keep a required cross-section shape there.

Thus, motorcycle seat frame 1 is made of a fiber reinforced resin, and more preferably, a unidirectional reinforcing-fiber base material is appropriately provided while the cross-section structure of side surface part 3 is devised, so that the target weight reduction of the seat frame as a whole and a desirable bending stiffness in a predetermined direction are both achieved.

### Industrial Applications of the Invention

The motorcycle seat frame according to the present invention is applicable to any type of seat frames having a bottom surface part and a side surface part.

### Explanation of symbols

- 1:: motorcycle seat frame
- 2:: bottom surface part
- 3:: side surface part
- 4:: fixation coupling part
- 5:: hole
- 6:: connection wall
- 7:: first side surface part
- 8:: second side surface part
- 9:: coupling part
- X-X:: vehicle longitudinal direction
- Y-Y:: vehicle width direction
- Z-Z:: vehicle vertical direction

## Claims

1. A motorcycle seat frame **characterized in that** a bottom surface part extending along a vehicle longitudinal direction and a side surface part standing upward at least at positions on both sides in a vehicle width direction of the bottom surface part are made of a fiber reinforced resin.

2. The motorcycle seat frame according to claim 1, wherein a bending stiffness in a vehicle vertical direction is set greater than that in the vehicle width direction.

3. The motorcycle seat frame according to claim 1 or 2, wherein the fiber reinforced resin comprises a unidirectional reinforcing-fiber base material in which reinforcing fibers are oriented in the vehicle longitudinal direction.

4. The motorcycle seat frame according to claim 3, wherein at least two different portions in the vertical direction are made of the unidirectional reinforcing-fiber base material.

5. The motorcycle seat frame according to any of claims 1 to 4, wherein the side surface part consists of a first side surface part standing upward from the bottom surface part, a second side surface part positioned across a space outside the vehicle from the first side surface part, and a coupling part which couples the first side surface part and the second side surface part.

6. The motorcycle seat frame according to claims 5, wherein the unidirectional reinforcing-fiber base material in which reinforcing fibers are oriented in the vehicle longitudinal direction is provided at least in the coupling part.

7. The motorcycle seat frame according to claims 6, wherein the unidirectional reinforcing-fiber base material is also provided in either the bottom surface part or a position close thereto.

8. The motorcycle seat frame according to any of claims 1 to 7, wherein the reinforcing fiber in the fiber reinforced resin is a carbon fiber.
